# EUROPÄISCHE PATENTSCHRIFT

(11) **EP 2 483 642 B1**
(45) Veröffentlichungstag und Bekanntmachung des Hinweises auf die Patenterteilung: **14.08.2013**
(21) Anmeldenummer: 10760666.7
(22) Anmeldetag: 28.09.2010
(51) Int. Cl.: G01F 1/688, G01P 5/10, G01P 5/26

(54) **ABGASVOLUMENBESTIMMUNGSVORRICHTUNG**
EXHAUST GAS VOLUME DETERMINATION DEVICE
DISPOSITIF POUR LA DÉTERMINATION DU VOLUME DE GAZ D'ÉCHAPPEMENT

(30) Priorität: 29.09.2009 DE 102009043346
(43) Veröffentlichungstag der Anmeldung: 08.08.2012
(73) Patentinhaber: Siemens Aktiengesellschaft, 80333 München (DE)
(72) Erfinder: BOSSELMANN, Thomas, 91080 Marloffstein (DE)
(86) Internationale Anmeldenummer: PCT/EP2010/064340
(87) Internationale Veröffentlichungsnummer: WO 2011/039169

(56) Entgegenhaltungen:
- WO-A2-2004/042326
- LATKA I ET AL: "Monitoring of inhomogeneous flow distributions using fibre-optic Bragg grating temperature sensor arrays", PROCEEDINGS OF SPIE - THE INTERNATIONAL SOCIETY FOR OPTICAL ENGINEERING - OPTICAL SENSING II, 3. April 2006 (2006-04-03), XP040223478, ISSN: 0277-786X, DOI: 10.1117/12.668899

## Beschreibung

Die Erfindung betrifft eine Abgasvolumenbestimmungsvorrichtung für eine stationäre oder mobile Einrichtung, insbesondere ein Schiff.

Große stationäre und mobile Einrichtungen, wie z.B. fossile Kraftwerke, Industrieanlagen oder auch Schiffe, tragen wesentlich mit dazu bei, durch Schadstoffausstoß (z.B. CO2) das Klima zu verändern und die Umwelt zu belasten. Es ist daher zu erwarten, dass in naher Zukunft das Abgasvolumen derartiger Einrichtungen ermittelt wird, um daraus über Emissionszertifikate eine Kontrolle der Emissionen zu erreichen.

Hierzu ist es bereits bekannt, das Abgasvolumen indirekt anhand von Betriebsparametern der Einrichtung, wie z.B. von einem Brennstoffverbrauch, einer Brennstoffzusammensetzung, einer Verbrennungstemperatur, etc. zu ermitteln. Dabei werden üblicherweise von dem Hersteller oder Betreiber einer Verbrennungseinrichtung oder -kraftmaschine der Einrichtung bereitgestellte Daten und Zusammenhänge zwischen den Betriebsparametern und dem Abgasvolumen zugrunde gelegt. Es besteht dabei jedoch keine Möglichkeit, auf neutralem unabhängigem Wege die dadurch ermittelten Abgasvolumen zu verifizieren.

WO 2004/042326 A2 offenbart ein Messelement zur Bestimmung einer Strömungsgeschwindigkeit eines das Messelement umströmenden Fluids mit einem Leiter zum Führen einer elektromagnetischen Welle entlang seiner Längserstreckung und wenigstens einem zum Leiter benachbart angeordneten, elektrischen Heizelement, mittels welchem der Leiter mit Wärme beaufschlagbar ist. Dabei wird eine in den Leiter eingekoppelte elektromagnetische Welle entsprechend der von der Strömungsgeschwindigkeit des Fluids abhängigen Temperatur des Leiters beeinflusst.

Latka, I. et al: "Monitoring of inhomogeneous flow distributions using fibre-optic Bragg grating temperature sensor arrays", PROCEEDINGS OF SPIE - THE INTERNATIONAL SOCIETY FOR OPTICAL ENGINEERING - OPTICAL SENSING II, offenbart eine Messvorrichtung mit Faser-Bragg-Gitter-Sensoren zur Bestimmung einer inhomogenen Strömungsgeschwindigkeitsverteilung in einem strömenden Gas.

Ausgehend hiervon ist es Aufgabe vorliegender Erfindung, eine verbesserte Abgasvolumenbestimmungsvorrichtung bereitzustellen, die es erlaubt, mit hoher Genauigkeit das Abgasvolumen bei stationären und mobilen Einrichtungen zu ermitteln. Weiterhin sollen ein Verfahren zu deren Betrieb sowie eine besonders vorteilhafte Verwendung der Vorrichtung angegeben werden.

Die Lösung dieser Aufgabe gelingt durch eine Abgasvolumenbestimmungsvorrichtung gemäß Patentanspruch 1. Vorteilhafte Ausgestaltungen sind jeweils Gegenstand der Unteransprüche 2 bis 13. Ein Verfahren zum Betrieb einer derartigen Vorrichtung ist Gegenstand des Patentanspruchs 14. Eine besonders vorteilhafte Verwendung der erfindungsgemäßen Vorrichtung ist Gegenstand des Patentanspruchs 15.

Eine erfindungsgemäße Abgasvolumenbestimmungsvorrichtung für eine stationäre oder mobile Einrichtung, insbesondere ein Schiff, umfasst mehrere quer zur Strömungsrichtung eines Abgases in einem Abgaskanal der Einrichtung an vorbestimmten Positionen verteilt angeordnete Bragg-Gitter, die in einer Lichtwellenleiterstruktur ausgebildet sind, die aus zumindest einen Lichtwellenleiter besteht, wobei benachbart zu diesen Bragg-Gittern entweder eine Heizeinrichtung angeordnet ist, mit der die Bragg-Gitter mit Wärme beaufschlagbar sind, oder eine Kühleinrichtung angeordnet ist, durch die die Bragg-Gitter mit Kälte beaufschlagbar sind.

Wenn Licht in die Lichtwellenleiterstruktur eingekoppelt wird, wird dieses an den darin angeordneten Bragg-Gittern entgegen seiner ursprünglichen Ausbreitungsrichtung zurückgestreut. Das Spektrum des zurückgestreuten Lichts ist dabei abhängig von der Gitterkonstante des Gitters. Die Gitterkonstante ist wiederum abhängig von der Temperatur des Gitters. Werden nun die Bragg-Gitter durch die Heizeinrichtung erwärmt bzw. durch die Kühleinrichtung gekühlt, so wird ein Teil der Wärmeleistung bzw. der Kühlleistung durch ein an den Gittern vorbeiströmendes Abgas abgeführt. Der abgeführte Teil ist dabei umso größer, je größer die Strömungsgeschwindigkeit des Abgases ist. Durch das in dem Abgaskanal an den Bragg-Gittern vorbeiströmende Abgas wird somit die Temperatur der Bragg-Gitter beeinflusst, und zwar umso mehr, je größer die Strömungsgeschwindigkeit des Abgases ist. In Abhängigkeit von der Temperatur des Bragg-Gitters ändert sich jedoch auch die Gitterkonstante des Gitters. Das Spektrum des zurückgestreuten Lichts ist somit abhängig von der Strömungsgeschwindigkeit des Abgases an dem Bragg-Gitter. Aus der Strömungsgeschwindigkeit des Abgases und der von dem Abgas durchströmten Fläche kann wiederum das Volumen das an den Gittern vorbeiströmenden Abgases abgeleitet werden.

Dabei ist jedoch zu beachten, dass in großen industriellen und mobilen Einrichtungen die Abgaskanäle eine sehr große Querschnittsfläche von bis zu mehreren Quadratmetern aufweisen können. Damit kann man nicht mehr voraussetzen, dass eine über den gesamten Querschnitt homogene Strömung des Abgases vorliegt. Eine punktuelle Messung wäre daher nicht hinreichend. Deshalb werden mehrere Bragg-Gitter an vorbestimmten Positionen quer zur Strömungsrichtung des Abgases, d.h. in einer Querschnittsfläche des Abgaskanals, verteilt angeordnet. Hierdurch ist eine verteilte Strömungsmessung des Abgases über die gesamte Querschnittsfläche des Abgaskanals möglich, wodurch eine hohe Genauigkeit bei der Bestimmung des Abgasvolumens auch bei inhomogenen Abgasströmungen erzielt werden kann. Da Lichtwellenleiter einen sehr geringen Durchmesser und folglich einen geringen Strömungswiderstand aufweisen, stellt die Lichtleiterstruktur für eine derartige verteilte Strömungsmessung einen vernachlässigbaren Strömungswiderstand für den Abgasstrom dar, so dass der Betrieb der Einrichtung durch die Abgasvolumenbestimmung nicht beeinflusst wird. Es kann somit auf direktem Wege und unabhängig von Hersteller- oder Betreiberinformationen und mit hoher Genauigkeit das Abgasvolumen bestimmt werden.

Zusätzlich kann aus den ermittelten Strömungsgeschwindigkeiten auch die Masse des Abgases bestimmt werden. Hierzu muss nur die Dichte des Abgases bestimmt werden. Diese Dichte entspricht in erster Näherung der Dichte von Luft, wobei allerdings die Temperaturabhängigkeit der Dichte berücksichtigt werden muss. Die Abgastemperatur bzw. eine Abgastemperaturverteilung kann jedoch sehr einfach ebenfalls anhand des Spektrums des an den Bragg-Gittern der Lichtwellenleiterstruktur zurückgestreuten Lichts bestimmt werden. Dies ist dadurch möglich, dass die Bragg-Gitter für eine vorgegebene Zeit nicht beheizt bzw. gekühlt werden, so dass sie die Temperatur des Abgases aufweisen.

Für die Ermittlung von Messwerten zu den Strömungsgeschwindigkeiten an den Bragg-Gittern und die weiteren Auswertungen umfasst die erfindungsgemäße Vorrichtung zumindest eine Lichtquelle zur Einstrahlung von Licht in die Lichtwellenleiterstruktur und zumindest eine Signalverarbeitungseinrichtung, welche aus von Bragg-Gittern in der Lichtwellenleiterstruktur entgegen seiner ursprünglichen Ausbreitungsrichtung zurückgestreutem Licht die Strömungsgeschwindigkeit des Abgases entlang des Verlaufes der Lichtwellenleiterstruktur bestimmt und daraus das durch den Abgaskanal strömende Abgasvolumen ableitet.

Der zumindest eine Lichtwellenleiter ist dabei vorzugsweise durch eine Glasfaser gebildet, da sich diese durch hohe Beständigkeit gegenüber physikalischen und/oder chemischen Beanspruchungen auszeichnet und insbesondere eine hohe Temperaturbeständigkeit aufweist. Je nach Anwendungsfall kann der Lichtwellenleiter jedoch auch durch eine Kunststofffaser gebildet sein.

Eine gute Verteilung der Bragg-Gitter bei gleichzeitig guter mechanischer Stabilität ist auf konstruktiv einfache Weise dadurch möglich, dass die Lichtwellenleiterstruktur mehrere sich kreuzende Lichtwellenleiterabschnitte umfasst.

Eine besonders gleichmäßige Verteilung der Bragg-Gitter für eine besonders einfache Ableitung des Abgasvolumens aus den einzelnen, an den Bragg-Gittern gemessenen Strömungsgeschwindigkeiten ist dabei dadurch möglich, dass die sich kreuzenden Lichtwellenleiterabschnitte ein Lichtwellenleiternetz ausbilden. Ein derartiges Lichtwellenleiternetz weist vorzugsweise Maschen jeweils gleicher Größe auf, wobei zwischen zwei Maschenknoten jeweils genau ein Bragg-Gitter angeordnet ist.

Das Lichtwellenleiternetz kann dabei durch einen einzigen Lichtwellenleiter ausgebildet sein. Hierdurch kann der Geräteaufwand für die Einkopplung von Licht und für die spektrale Analyse des zurück gestreuten Lichts besonders gering gehalten werden.

Gemäß einer weiteren vorteilhaften Ausgestaltung der Erfindung weist die Lichtwellenleiterstruktur einen spiralförmig verlaufenden Lichtwellenleiter auf, in dem die Bragg-Gitter hintereinander angeordnet sind. Auch hierdurch ist mit nur einem einzigen Lichtwellenleiter eine gute Verteilung von Bragg-Gittern über die gesamte Strömungsquerschnittsfläche des Abgases möglich.

Für eine besonders hohe Messgenauigkeit sind durch die Heizeinrichtung die Bragg-Gitter auf eine Temperatur oberhalb der Abgastemperatur aufheizbar bzw. durch die Kühleinrichtung die Bragg-Gitter auf eine Temperatur unterhalb der Abgastemperatur abkühlbar sind.

Eine besonders gleichmäßige Erwärmung bzw. Kühlung der Lichtwellenleiterstruktur ist dadurch möglich, dass die Heizeinrichtung bzw. die Kühleinrichtung entlang des zumindest einen Lichtwellenleiters der Lichtwellenleiterstruktur und benachbart zu diesem angeordnet ist.

Eine besonders hohe Genauigkeit der Messung kann dann dadurch erzielt werden, dass durch die Heizeinrichtung bzw. die Kühleinrichtung eine vorbestimmbare Wärme- bzw. Kälteleistung pro Längeneinheit des Lichtwellenleiters abgebbar ist.

Gemäß einer konstruktiv besonders einfachen Ausgestaltung ist die Heizeinrichtung durch einen elektrischen Leiter gebildet.

Zur Vergrößerung der mechanischen Stabilität und zum Schutz vor aggressiven Abgasen kann der zumindest eine Lichtwellenleiter und die zu diesem benachbarte Heizeinrichtung bzw. Kühleinrichtung in oder an einem steifen Trägerkörper angeordnet sein, dessen Form den Verlauf des Lichtwellenleiters in dem Abgaskanal festlegt. Der Trägerkörper besteht bevorzugt aus einem Rohr und/oder aus einem Stab mit einer Nut und kann beispielsweise aus einem keramischen Werkstoff oder aus Metall bestehen.

Der Lichtwellenleiter ist von Vorteil austauschbar in einem Hohlraum des Trägerkörpers angeordnet und durch den Trägerkörper vor unmittelbarem Kontakt mit dem Abgas geschützt.

Von besonderem Vorteil ist es, wenn der Trägerkörper zugleich die Heizeinrichtung bildet.

Bei einem erfindungsgemäßen Verfahren zur Bestimmung des Volumens eines Abgases mit einer vorstehend erläuterten Vorrichtung wird Licht in die Lichtwellenleiterstruktur eingekoppelt, aus von den darin angeordneten Bragg-Gittern entgegen seiner ursprünglichen Ausbreitungsrichtung zurückgestreutem Licht die Strömungsgeschwindigkeit des Abgases entlang des Verlaufes der Lichtwellenleiterstruktur bestimmt und daraus das durch den Abgaskanal strömende Abgasvolumen abgeleitet.

Eine besonders vorteilhafte Verwendung der erfindungsgemäßen Vorrichtung und des erfindungsgemäßen Verfahrens liegt in der Abgasemissionsmessung von stationären und mobilen Einrichtungen, insbesondere von Schiffen, wobei anhand eines ermittelten Abgasvolumens und zumindest eines Messwerts für die Konzentration eines Schadstoff in dem Abgas eine Schadstoffemission der Einrichtung bestimmt wird. Die Messung der Konzentration des Schadstoffes in dem Abgas kann dabei punktuell an nur einer Stelle erfolgen, wenn eine homogene Verteilung der Konzentration des Schadstoffes in dem Abgas vorliegt. Falls die Verteilung der Konzentration jedoch inhomogen ist, sollte eine quer zur Strömungsrichtung verteilte Messung der Schadstoffkonzentration an mehreren Punkten erfolgen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: einen schematischen Aufbau einer erfindungsgemäßen Abgasvolumenbestimmungsvorrichtung ,
- FIG 2: eine Draufsicht auf eine Lichtwellenleiterstruktur, die aus zwei parallel zueinander verlaufende Lichtwellenleitern besteht,
- FIG 3: eine Draufsicht auf eine als ein Lichtwellenleiternetz ausgebildete Lichtwellenleiterstruktur,
- FIG 4: eine Draufsicht auf eine als ein Lichtwellenleiternetz ausgebildete Lichtwellenleiterstruktur, wobei das Lichtwellenleiternetz durch einen einzigen Lichtwellenleiter ausgebildet ist,
- FIG 5: eine Draufsicht auf eine Lichtwellenleiterstruktur, die aus einem Lichtwellenleiter mit kreisförmigem Verlauf besteht,
- FIG 6: eine Draufsicht auf eine Lichtwellenleiterstruktur, die aus einem Lichtwellenleiter mit spiralförmigem Verlauf besteht,
- FIG 7: eine Heizeinrichtung mit zwei Heizelementen, zwischen denen ein Lichtwellenleiter angeordnet ist,
- FIG 8: einen von einem keramischen Werkstoff umgebenen Lichtwellenleiter,
- FIG 9: einen mit einer Metallschicht bedampften Lichtwellenleiter und
- FIG 10: eine Heizeinrichtung mit zwei Heizdrähten, die elektrisch in Serie geschaltet sind.

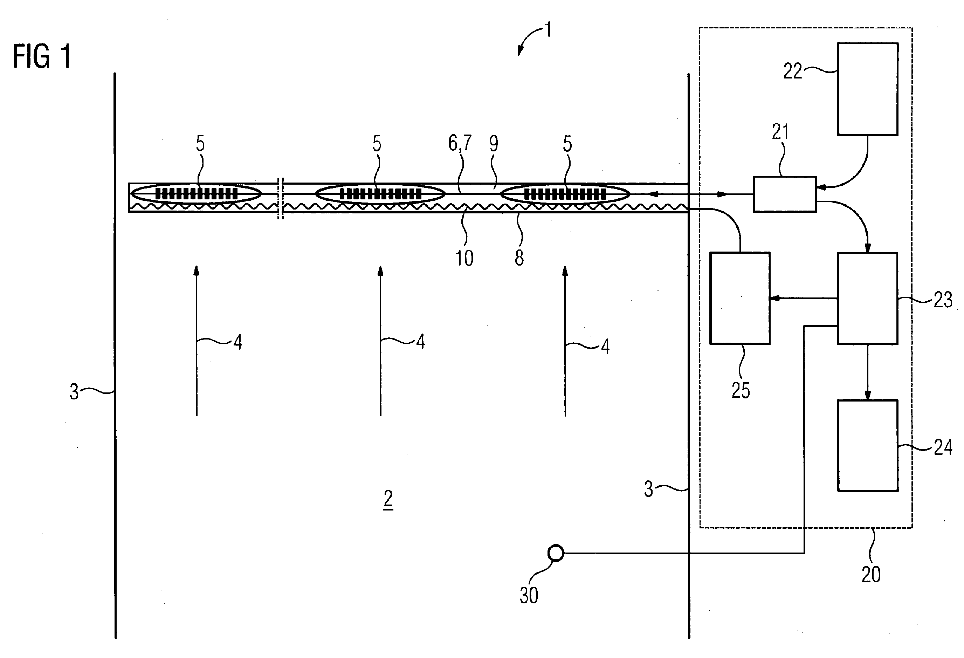

FIG 1 zeigt den schematischen Aufbau einer erfindungsgemäßen Abgasvolumenbestimmungsvorrichtung 1 für eine große stationäre oder mobile Einrichtung, wie z.B. ein Kraftwerk, eine industrielle Anlage oder eines Schiffes. Die Vorrichtung 1 ist in einem Abgaskanal 2 angeordnet, der seitlich durch Wände 3 begrenzt wird. Beispielsweise handelt es sich hierbei um einen Schlot, Abgaskamin oder Schornstein der Einrichtung. Dieser hat beispielsweise einen kreisförmigen Querschnitt. Es sind jedoch auch andere Querschnittsgeometrien des Abgaskanals (z.B. rechteckig, quadratisch, oval) denkbar. In dem Abgaskanal 2 sind quer zur Strömungsrichtung 4 eines Abgases an vorbestimmten Positionen verteilt Bragg-Gitter 5 angeordnet, die in einer Lichtwellenleiterstruktur 6 ausgebildet bzw. eingearbeitet sind. Die Lichtwellenleiterstruktur 6 umfasst zur Vereinfachung der Darstellung hier nur einen geradlinig verlaufenden Lichtwellenleiter 7. In der Praxis umfasst sie jedoch vorzugsweise mehrere Lichtwellenleiter oder aber einen einzigen Lichtwellenleiter mit einem im Wesentlichen nichtlinearen Verlauf. Als Lichtwellenleiter wird vorzugsweise ein flexibles Glasfaserkabel eingesetzt.

Der Lichtwellenleiter 7 ist in einem steifen Trägerkörper in Form eines dünnwandigen Rohrs oder Röhrchens 8 aus Metall oder aus Kunststoff angeordnet, das quer zur Strömungsrichtung des Abgases in dem Abgaskanal 2 angeordnet ist und dessen Form den Verlauf des Lichtwellenleiters 7 in dem Abgaskanal 2 festlegt. Der Lichtwellenleiter 7 ist dabei austauschbar in einem Hohlraum 9 des Trägerkörpers 8 angeordnet und durch den Trägerkörper 8 vor unmittelbarem Kontakt mit dem Abgas geschützt.

Durch eine benachbart zu den Bragg-Gittern 5 angeordneten Heizeinrichtung 10 sind die Bragg-Gitter 5 mit Wärme beaufschlagbar. Die Heizeinrichtung 10 ist ebenfalls in dem Rohr 8 angeordnet. Die Heizeinrichtung 10 kann beispielsweise ein elektrischer Leiter in Form eines Heizdrahtes sein, der entlang der Innenwand des Rohres 8 angebracht ist. Eine derartige Anordnung stellt im Grunde ein "faseroptisches Hitzdrahtanemometer" dar. Durch die Heizeinrichtung 10 wird der Lichtwellenleiter 7 gleichmäßig entlang seiner gesamten Länge auf eine Temperatur erwärmt, die oberhalb der Temperatur des Abgases im Bereich der Vorrichtung 1 ist. Alternativ kann die Heizeinrichtung auch durch ein warmes Fluid gebildet sein, welches durch das Rohr 8 strömt.

Die Erwärmung des Rohrs oder Röhrchens 8 kann statt über einen Heizdraht auch direkt durch einen Stromfluss durch das Rohr oder Röhrchen 8 erfolgen. Dieses wärmt sich durch den Stromfluss auf und dient dann nicht nur als Trägerkörper, sondern auch als Heizeinrichtung für den Lichtwellenleiter 7. Durch das Röhrchen 8 kann der Lichtwellenleiter 7 gleichmäßig entlang seiner gesamten Länge auf eine Temperatur erwärmt werden, die beispielweise 50 - 100°C oberhalb der Temperatur des Abgases im Bereich der Sensoreinheit 11 liegt. Als Material für das Röhrchen kommen beispielsweise hochtemperaturfeste Nickelbasislegierungen (wie z.B. eine Inconel-Legierung) zum Einsatz, die eine Temperaturfestigkeiten von 600°C und mehr aufweisen. Das Röhrchen 8 hat dann beispielsweise einen Außendurchmesser von 1.5 mm und einem Innendurchmesser von 0.5 mm. Glasfasern sind sogar mit noch höheren Temperaturfestigkeiten verfügbar.

Die Lichtwellenleiterstruktur 6 bzw. der Lichtwellenleiter 7 ist mit einer Mess- und Auswerteeinheit 20 verbunden. Diese umfasst einen optischen Richtkoppler 21, eine Lichtquelle 22, eine Signalverarbeitungseinrichtung 23, eine Anzeigeeinheit 24 und eine Energiequelle 25. Der Lichtwellenleiter 7 ist über den optischen Richtkoppler 21 mit der Lichtquelle 22 und mit der Signalverarbeitungseinrichtung 23 verbunden. Der Richtkoppler 21 koppelt von der Lichtquelle 22 abgestrahltes Licht in den Lichtwellenleiter 7 ein und aus diesem zurückgestreutes Licht zu der Signalverarbeitungseinrichtung 23 aus. Der Signalverarbeitungseinrichtung 23 ist die Anzeigeeinheit 24 nachgeschaltet. Die Energiequelle 25 dient zur Energieversorgung der Heizeinrichtung 10. Die Energiequelle 25 kann von der Signalverarbeitungseinrichtung 23 aus aktiviert werden. Bei Aktivierung der Energiequelle 25 erwärmt die Heizeinrichtung 10 den Lichtwellenleiter 7 mitsamt den Bragg-Gittern 5 gleichmäßig entlang seiner gesamten Länge.

Die Bragg-Gitter 5 sind entlang des Lichtwellenleiters 7 in diesem an vorbestimmten Positionen mit gleichen oder untereinander verschiedenen Gitterperioden ausgebildet. Werden Bragg-Gitter 5 mit unterschiedlichen Gitterperioden eingesetzt, so wird bevorzugt eine breitbandig abstrahlende Lichtquelle 22 eingesetzt. Werden dagegen Bragg-Gitter mit gleichen oder im Wesentlichen gleichen Gitterperioden eingesetzt, so wird vorzugsweise eine gepulste, monochromatische Lichtquelle 22 eingesetzt. Die Bragg-Gitter 5 bestehen aus einer periodischen Folge von scheibenförmigen Bereichen, die einen von dem normalen Brechungsindex eines Kerns des Lichtwellenleiters 7 abweichenden Brechungsindex aufweisen.

Wird in Bragg-Gitter 5 die beispielsweise unterschiedliche Gitterperioden aufweisen, Licht mit einer breitbandigen Verteilung der Intensität über der Wellenlänge eingestrahlt, dann wird ein geringer Teil des Lichtes an den Bragg-Gittern zurückgestreut, und zwar mit einer jeweils charakteristischen spektralen Intensitätsverteilung, die von der Gitterperiode des jeweiligen Gitters abhängt.

Eine lokale Temperaturänderung des Lichtwellenleiters 7 im Bereich eines Bragg-Gitters 5 führt zu einer lokalen Längenexpansion oder -kontraktion und damit zu einer Änderung der Gitterperiode, was eine Verschiebung der spektralen Intensitätsverteilung des zurückgestreuten Lichtes zur Folge hat. Das Ausmaß dieser Verschiebung ist ein Maß für die Längenänderung und damit für die Temperaturänderung.

Zur Abgasvolumenmessung mittels der Lichtwellenleiterstruktur wird zunächst eine Temperaturmessung der Bragg-Gitter 5 vorgenommen. Von der Temperatur der Bragg-Gitter 5 wird dann auf die Strömungsgeschwindigkeit des Abgases in dem Abgaskanal 2 und von dieser auf das Abgasvolumen geschlossen.

Hierzu wird die Energiequelle 25 aktiviert und gibt Leistung an die Heizeinrichtung 10 ab, was zu einer Erwärmung des Lichtwellenleiters 7 gegenüber seiner Umgebung und insbesondere auch gegenüber den Abgasen führt. Der Lichtwellenleiter 7 wird dabei auf eine Temperatur erwärmt, die - ohne das vorbeiströmende Abgas - über der Temperatur des an dem Lichtwellenleiter 7 vorbeiströmenden Abgases liegen würde. Über das an den Bragg-Gittern 5 vorbeiströmende Abgas wird jedoch ein Teil der von der Heizeinrichtung 10 ausgehenden Wärmeleistung abgeleitet. Es wird dabei umso mehr Wärmeleistung abgeleitet, je größer die Strömungsgeschwindigkeit des vorbeiströmenden kühleren Abgases ist.

Die Signalverarbeitungseinrichtung 23 enthält einen Spektralanalysator zur Ermittlung der spektralen Verteilung des von den einzelnen Bragg-Gittern 5 zurück gestreuten Lichtes und eine Recheneinrichtung, welche das Ausmaß der jeweiligen Verschiebung gegenüber einer Referenzlage ermittelt und in eine Temperaturänderung gegenüber einer Referenztemperatur, bei der die spektrale Verteilung die Referenzlage hat, umrechnet. Dies geschieht für jedes einzelne Bragg-Gitter 5, so dass auf diese Weise die Verteilung der Temperatur entlang des gesamten Lichtwellenleiters 7 an den mit Bragg-Gittern 5 versehenen Stellen erhalten wird.

Anhand dieser Temperaturen kann in der Signalverarbeitungseinrichtung 23 die Strömungsgeschwindigkeit des Abgases entlang des gesamten Lichtwellenleiters 7 an den mit Bragg-Gittern 5 versehenen Stellen bestimmt und daraus das durch den Abgaskanal 2 strömende Abgasvolumen abgeleitet und an der Anzeigeeinheit 24 ausgegeben werden. Die Gesamtquerschnittsfläche des Abgaskanals im Bereich der Lichtwellenleiterstruktur 6 ist dabei in Teilflächen um die verschiedenen Bragg-Gitter 5 herum aufgeteilt. Aus der mit einem Bragg-Gitter 5 einer Teilfläche gemessenen Strömungsgeschwindigkeit und der Fläche der Teilfläche kann das durch die Teilfläche strömende Abgasvolumen ermittelt werden. Die Summer der durch sämtliche Teilflächen strömenden Abgas(teil)volumina ergibt dann das durch den Abgaskanal strömende Gesamtabgasvolumen. Die Genauigkeit kann dabei noch erhöht werden, wenn die Strömungsgeschwindigkeit zwischen den verschiedenen Messpunkten noch interpoliert wird und somit die Strömungsgeschwindigkeitsverteilung über den Teilflächen berücksichtigt wird. Es erfolgt somit keine punktuelle, sondern eine über die gesamte Strömungsquerschnittsfläche verteilte Strömungsmessung. Diese ermöglicht auch bei Querschnittsflächen des Abgaskanals 2 von mehreren Quadratmetern eine hohe Genauigkeit bei der Abgasvolumenbestimmung, ohne dass es zu einer nennenswerten Veränderung des Strömungswiderstandes in dem Abgaskanal 2 kommt. Bei kleinen Querschnittsflächen des Abgaskanals 2 kann dagegen auch bereits ein einziges Bragg-Gitter zu Abgasvolumenbestimmung ausreichend sein, d.h. es ist dann bereits ein einziger Lichtwellenleiter mit nur einem einzigen Bragg-Gitter zur Abgasvolumenbestimmung ausreichend.

Bei Verwendung von Bragg-Gittern mit gleicher oder im Wesentlichen gleicher Gitterperiode weist die Signalverarbeitungsvorrichtung 23 zusätzlich eine Auswerteelektronik auf, welche die Laufzeit des rückgestreuten Lichts mit veränderter spektraler Intensitätsverteilung erfasst und auswertet. Um eine zeitaufgelöste Messung zu realisieren, kann auf gängige OTDR (Optical Time Domain Reflectometry) - Technik zurückgegriffen werden, wie sie in der Nachrichtentechnik zur Qualitätsbeurteilung von Signalstrecken verwendet wird.

Statt der Heizeinrichtung 10 kann auch eine Kälteeinrichtung verwendet werden, durch die der Lichtwellenleiter 7 und die darin eingearbeiteten Bragg-Gitter 5 mit Kälte beaufschlagbar sind. Als Kältemittel kann beispielsweise ein durch das Rohr 8 strömendes Fluid zum Einsatz kommen. Die Bragg-Gitter 5 können dann auf eine Temperatur abgekühlt werden, die - ohne das vorbeiströmende Abgas - unterhalb der Temperatur des Abgases liegen würde. Über das an den Bragg-Gittern 5 vorbeiströmende Abgas wird jedoch ein Teil der von der Kälteeinrichtung 19 ausgehenden Kälteleistung abgeleitet. Es wird dabei umso mehr Kälteleistung abgeleitet, je größer die Strömungsgeschwindigkeit des vorbeiströmenden wärmeren Abgases ist. Auch auf diesem Weg kann anhand der an den Bragg-Gittern gemessenen Temperaturen die Strömungsgeschwindigkeiten bestimmt und daraus in der Signalverarbeitungseinrichtung 23 das Abgasvolumen abgeleitet werden.

Besonders vorteilhaft umfasst die Vorrichtung 1 noch einen Sensor 30 zur Bestimmung der Konzentration eines Schadstoffes, wie z.B. Co2, NOx oder Schwefel in den Abgasen. Der Sensor 30 ist ebenfalls mit der Signalverarbeitungsvorrichtung 23 verbunden. In der Signalverarbeitungsvorrichtung 23 kann somit anhand eines ermittelten Abgasvolumens und eines Messwerts für die Konzentration des Schadstoffes in dem Abgas eine Schadstoffemission der Einrichtung bestimmt und auf der Anzeigeeinheit 24 ausgegeben werden. Auf diesem Weg kann mit geringem konstruktivem Aufwand eine Abgasemissionsmessung von stationären und mobilen Einrichtungen, insbesondere von Schiffen, erfolgen. Die Messung der Konzentration des Schadstoffes in dem Abgas kann entweder punktuell mittels handelsüblicher Messgeräte oder verteilt (z.B. über Laser-Absorptions-Spektroskopie) erfolgen.

Vorteilhaft ist es, wenn die von der Heizeinrichtung 10 abzugebende Wärmeleistung einstellbar ist. Die Wärmeleistung kann in diesem Fall an die Abgastemperatur so angepasst werden, dass sich in dem Lichtwellenleiter 7 von der Signalverarbeitungseinrichtung 23 sicher detektierbare Temperaturunterschiede einstellen, ohne dass ein unnötiges Übermaß an Leistung umgesetzt wird. Die Einstellung kann automatisch erfolgen, indem die von der Energiequelle 25 in die Heizeinrichtung 10 eingespeiste Leistung ausgehend von einem relativ niedrigen Ausgangswert so lange schrittweise erhöht wird, bis die Signalverarbeitungseinrichtung 23 entlang des Lichtwellenleiters 7 eindeutige Temperaturunterschiede feststellt.

Die Auflösung und somit Genauigkeit der Abgasvolumenmessung wird durch die Anzahl der Bragg-Gitter 5 pro Flächeneinheit des Abgaskanals und die Positionen der Bragg-Gitter 5 entlang des Lichtwellenleiters 7 vorgegeben und ist durch eine geeignete Auslegung an die Erfordernisse des jeweiligen Einsatzfalles anpassbar.

Zusätzlich kann aus den ermittelten Strömungsgeschwindigkeiten auch die Masse des Abgases bestimmt werden. Hierzu muss nur die Dichte des Abgases bestimmt werden. Diese Dichte entspricht in erster Näherung der Dichte von Luft, wobei allerdings die Temperaturabhängigkeit der Dichte berücksichtigt werden muss. Die Abgastemperatur bzw. eine Abgastemperaturverteilung kann sehr einfach ebenfalls anhand des Spektrums des an den Bragg-Gittern 5 der Lichtwellenleiterstruktur 6 zurückgestreuten Lichts bestimmt werden. Dies ist dadurch möglich, dass die Bragg-Gitter 5 für eine vorgegebene Zeit nicht beheizt bzw. gekühlt werden, so dass sie die Temperatur des Abgases aufweisen.

Die Mess- und Auswerteeinheit 20 kann im Bereich des Endes des Abgaskanals 2 außerhalb des Abgaskanals 2 angeordnet oder beispielsweise auch am Fuß des Schornsteins 3 oder in einer Automatisierungszentrale der Einrichtung angeordnet und über Kabel mit der Lichtwellenleiterstruktur 6 und der Heizeinrichtung 10 verbunden sein.

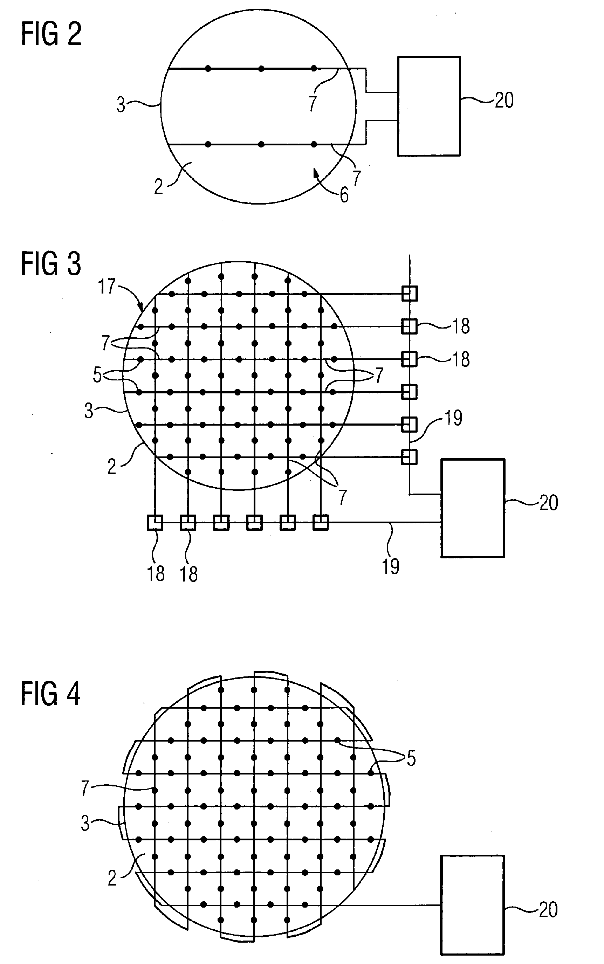

Eine im Abgaskanal 2 verteilte Anordnung der Bragg-Gitter mit guter Auflösung kann durch unterschiedliche Lichtwellenleiterstrukturen erzielt werden. Beispiele hierfür sind in den FIG 2 bis 6 dargestellt, wobei zur Vereinfachung der Darstellung jeweils nur die Lichtwellenleiterstruktur und die Bragg-Gitter dargestellt sind, die zugehörigen Heizeinrichtungen 10 und Trägerkörper 8 jedoch weggelassen sind.

Wie in einer Draufsicht in FIG 2 dargestellt, kann die Lichtwellenleiterstruktur 6 beispielsweise aus zwei parallel zueinander verlaufende Lichtwellenleitern 7 bestehen, die in einer Fläche senkrecht zur Strömungsrichtung 4 des Abgases in dem Strömungskanal 2 angeordnet sind und in die Bragg-Gitter 5 eingearbeitet sind. Die Mess- und Auswerteeinheit 20 weist hierzu für jeden der Lichtwellenleiter 7 jeweils eine Lichtquelle 22 und einen Richtkoppler 21 sowie eine gemeinsame Signalverarbeitungseinrichtung 23 auf. Die Lichtwellenleiterstruktur 6 kann statt durch zwei separate Lichtwellenleiter 7 alternativ auch durch nur einen einzigen Lichtwellenleiter 7 mit zwei parallel zueinander angeordneten Lichtwellenleiterabschnitten ausgebildet werden, wobei dann eine einzige Lichtquelle 22 und ein einziger Richtkoppler 21 ausreichend sind.

Gemäß FIG 3 kann die Lichtwellenleiterstruktur 6 auch aus mehreren sich kreuzenden Lichtwellenleitern 7 bestehen, durch die ein Lichtwellenleiternetz 17 ausgebildet ist. Das Lichtwellenleiternetz 17 weist vorzugsweise Maschen jeweils gleicher Größe auf. Zwischen zwei Maschenknoten ist jeweils genau ein Bragg-Gitter 5 angeordnet. Die einzelnen Lichtwellenleiter 7 können jeweils separat mit der Mess- und Auswerteeinheit 20 verbunden sein. Alternativ können - wie dargestellt - jeweils eine Anzahl von Lichtwellenleiter 7 über jeweils einen Multiplexer 18 mit einem zentralen Anschlussleiter 19 verbunden sein, der dann wiederum mit der Mess- und Auswerteeinheit 20 verbunden ist.

Wie in FIG 4 dargestellt, kann das Lichtwellenleiternetz 17 auch durch einen einzigen Lichtwellenleiter 7 ausgebildet sein, der abwechselnd von einer Seite des Abgaskanals 2 zu einer gegenüberliegenden Seite verläuft.

Durch die in FIG 3 und 4 gezeigten Netzstrukturen lässt sich eine besonders gleichmäßige Verteilung der Bragg-Gitter und somit besonders einfach und genau das Abgasvolumen bestimmen.

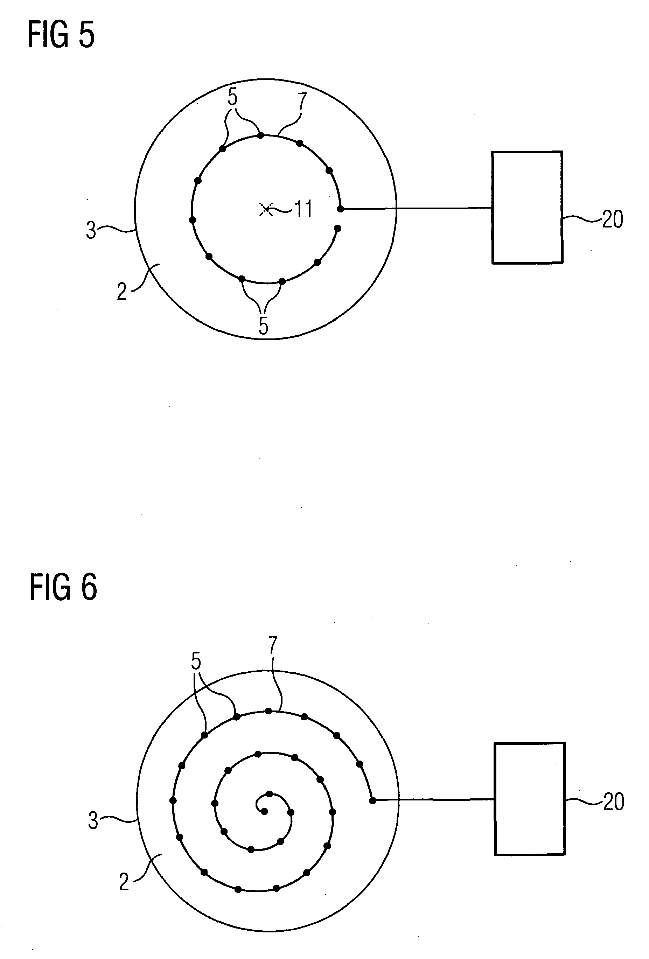

Wie in FIG 5 dargestellt, kann die Lichtwellenleiterstruktur 6 auch aus einem einzigen Lichtwellenleiter 7 mit kreisförmigem Verlauf bestehen, der radial zu einer Mittelachse 11 des Abgaskanals 2 in einer Fläche senkrecht zur Strömungsrichtung 4 des Abgases in dem Strömungskanal 2 angeordnet ist und in dem die Bragg-Gitter 5 hintereinander angeordnet sind.

Statt aus einem einzigen Lichtwellenleiter 7 mit einem kreisförmigem Verlauf kann die Lichtwellenleiterstruktur 6 - wie in FIG 6 dargestellt - auch aus einem einzigen Lichtwellenleiter 7 mit einem spiralförmigen Verlauf bestehen, der in einer Fläche senkrecht zur Strömungsrichtung 4 des Abgases in dem Strömungskanal 2 angeordnet ist und in dem die Bragg-Gitter 5 hintereinander angeordnet sind.

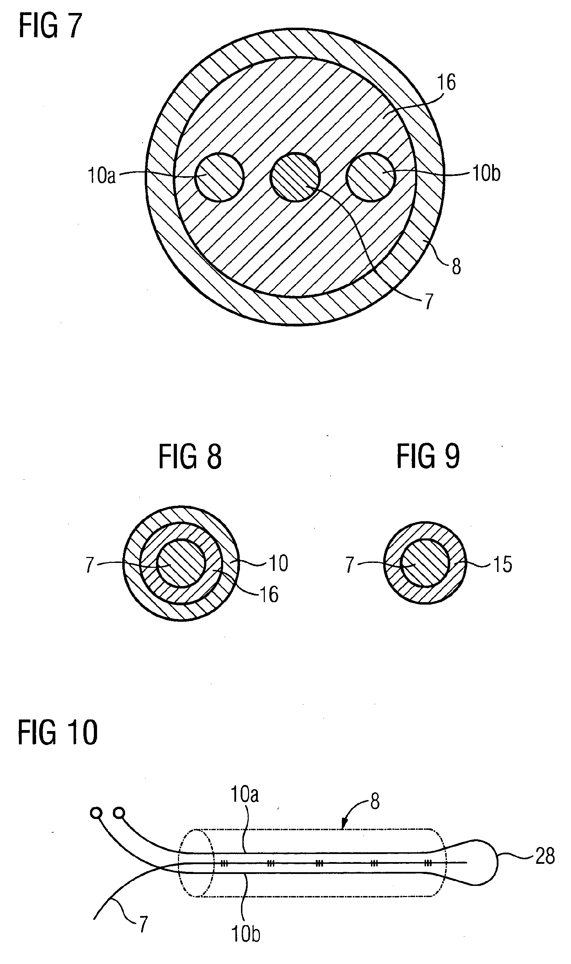

Auch bezüglich der Ausgestaltung und Anordnung der Heizeinrichtung in Bezug zu dem (den) Lichtwellenleiter(n) mit darin eingearbeiteten Bragg-Gittern bestehen verschiedene Möglichkeiten. Bei einer in Fig. 7 im Querschnitt gezeigten Anordnung besteht die Heizeinrichtung aus zwei Heizelementen 10a, 10b (z.B. einem Hinleiter und einem Rückleiter eines Heizdrahtes), zwischen denen ein Lichtwellenleiter 7, z.B. eine Glasfaser, angeordnet ist. Die gesamte Anordnung ist in einem keramischen Werkstoff 16 eingebettet, der seinerseits von einer passivierenden Ummantelung 12 umgeben ist.

In einer in Fig. 8 gezeigten Ausgestaltung ist ein Lichtwellenleiter 7, z.B. in Form einer Glasfaser, von einem keramischen Werkstoff 16 umgeben. Dieser ist wiederum voll umfänglich von der Heizeinrichtung 10 umgeben, welche zugleich eine Ummantelung bildet.

In einer in Fig. 9 gezeigten, weiteren Ausgestaltung ist die Glasfaser 7 mit einer Metallschicht 15 bedampft, die zugleich eine Ummantelung sowie die Heizeinrichtung bildet. Diese Ausgestaltung zeichnet sich durch eine Elastizität aus, durch die besonders einfach eine bedarfsgerechte Anpassung der erfindungsgemäßen Vorrichtung 1 in ihrer räumlichen Ausdehnung an einen Abgaskanal möglich ist. Zudem zeichnet sich diese Ausgestaltung durch ein besonders einfaches Herstellverfahren aus, in dem der Lichtwellenleiter 7 in einem Beschichtungsprozess konventioneller, bekannter Art mit dem gewünschten elektrischen Leiter beschichtet wird.

Die in den Ausgestaltungen von Fig. 7 - 9 verwendeten Heizeinrichtungen 10 bzw. Heizelemente 10a, 10b sind vorzugsweise aus einem Metall oder aus einer Metalllegierung. In Abhängigkeit von der physikalischen und/oder chemischen Beanspruchung können beispielsweise Stahl, Kupfer, Aluminium, Bronze, Konstanten oder dergleichen verwendet werden. Für Hochtemperaturanwendungen ist eine Beschichtung mit einem Metall wie Wolfram oder dergleichen vorzuziehen. Für Anwendungen bei niedrigen Temperaturen in einer chemisch aggressiven Umgebung können beispielsweise auch leitfähige Polymere eingesetzt werden. Darüber hinaus zeichnet sich die Ausgestaltung gemäß Fig. 9 dadurch aus, dass sie eine besonders geringe Wärmekapazität gegenüber den beiden anderen Versionen aufweist, so dass zeitliche Änderungen des Abgasvolumens rasch erfasst werden können.

In den dargestellten Ausführungsbeispielen weist die Heizeinrichtung 10 jeweils einen konstanten elektrischen Widerstandsbelag auf. Insbesondere ist der Widerstandsbelag im Betriebstemperaturbereich weitgehend unabhängig von der Temperatur. Eine Beaufschlagung der Heizeinrichtung 10 mit einem konstanten Strom bzw. mit einem Wechselstrom mit konstantem Effektivwert führt somit zu einer über die Länge der Heizeinrichtung 10 gleichmäßigen Wärmeerzeugung, so dass die Lichtwellenleiterstruktur über ihre gesamte Erstreckung gleichmäßig mit Wärme beaufschlagt wird.

Fig. 10 zeigt eine schematische Ansicht der Vorrichtung 1 von Fig. 1 mit einer Heizeinrichtung 10, die aus zwei Heizdrähten 10a, 10b besteht, die an einem Ende eines Trägerkörpers 8 über eine elektrische Verbindung 28 miteinander in Serie geschaltet sind. In dieser Ausgestaltung ist daher vorteilhaft die Vorrichtung 1 an einem Ende vollständig kontaktierbar. Das zweite Ende ist frei verfügbar, wodurch eine besonders einfache Montage und/oder Handhabung erreicht werden kann.

## Patentansprüche

1. Abgasvolumenbestimmungsvorrichtung für eine stationäre oder mobile Einrichtung, insbesondere ein Schiff, umfassend
- mehrere quer zur Strömungsrichtung (4) eines Abgases in einem Abgaskanal (2) der Einrichtung an vorbestimmten Positionen verteilt angeordnete Bragg-Gitter (5),
- eine Lichtwellenleiterstruktur (6), in der die Bragg-Gitter (5) ausgebildet sind, wobei die Lichtwellenleiterstruktur (6) aus zumindest einem Lichtwellenleiter (7) besteht,
- zumindest eine Lichtquelle (22) zur Einstrahlung von Licht in die Lichtwellenleiterstruktur (6) und
- zumindest eine Signalverarbeitungseinrichtung (23), welche aus von Bragg-Gittern (5) in der Lichtwellenleiterstruktur (6) entgegen seiner ursprünglichen Ausbreitungsrichtung zurückgestreutem Licht eine Strömungsgeschwindigkeit des Abgases entlang des Verlaufes der Lichtwellenleiterstruktur (6) bestimmt,
**gekennzeichnet durch**
- eine benachbart zu den Bragg-Gittern (5) angeordnete Heizeinrichtung (10), **durch** die die Bragg-Gitter (5) auf eine Temperatur oberhalb einer Abgastemperatur des Abgases aufheizbar sind, wobei eine von der Heizeinrichtung (10) abzugebende Wärmeleistung an die Abgastemperatur anpassbar ist, oder eine benachbart zu den Bragg-Gittern (5) angeordnete Kühleinrichtung, **durch** die die Bragg-Gitter (5) auf eine Temperatur unterhalb der Abgastemperatur abkühlbar sind, und **dadurch** gekennzeichnet, dass
- die Signalverarbeitungseinrichtung (23) aus der entlang des Verlaufes der Lichtwellenleiterstruktur (6) ermittelten Strömungsgeschwindigkeit des Abgases ein strömendes Abgasvolumen ableitet.

2. Vorrichtung (1) nach Anspruch 1,
**dadurch gekennzeichnet, dass** die Lichtwellenleiterstruktur (6) sich kreuzende Lichtwellenleiterabschnitte (7a) aufweist.

3. Vorrichtung (1) nach Anspruch 2,
**dadurch gekennzeichnet, dass** durch die sich kreuzenden Lichtwellenleiterabschnitte (7a) ein Lichtwellenleiternetz (17) ausgebildet ist.

4. Vorrichtung (1) nach Anspruch 3,
**dadurch gekennzeichnet, dass** das Lichtwellenleiternetz (17) durch einen einzigen Lichtwellenleiter (7) ausgebildet ist.

5. Vorrichtung (1) nach Anspruch 1,
**dadurch gekennzeichnet, dass** die Lichtwellenleiterstruktur (6) einen spiralförmig verlaufenden Lichtwellenleiter (7) aufweist, in dem die Bragg-Gitter (5) hintereinander angeordnet sind.

6. Vorrichtung (1) nach einem der vorhergehenden Ansprüche, **dadurch gekennzeichnet, dass** die Wärmeleistung der Heizeinrichtung (10) ausgehend von einem Ausgangswert automatisch so lange schrittweise erhöhbar ist, bis die Signalverarbeitungseinrichtung (23) entlang zumindest eines Lichtwellenleiters (7) eindeutige Temperaturunterschiede feststellt, oder dass die Kühleinrichtung wenigstens ein Rohr (8) umfasst, in dem zumindest ein Lichtwellenleiter (7) angeordnet und von einem Kältemittel umströmbar ist.

7. Vorrichtung (1) nach einem der vorhergehenden Ansprüche, **dadurch gekennzeichnet, dass** die Heizeinrichtung (10) bzw. Kühleinrichtung entlang des zumindest einen Lichtwellenleiters (7) der Lichtwellenleiterstruktur (17) und benachbart zu diesem angeordnet ist.

8. Vorrichtung (1) nach Anspruch 7,
**dadurch gekennzeichnet, dass** durch die Heizeinrichtung (10) bzw. Kühleinrichtung eine vorbestimmbare Wärme- bzw. Kälteleistung pro Längeneinheit des Lichtwellenleiters (7) abgebbar ist.

9. Vorrichtung (1) nach einem der vorhergehenden Ansprüche, **dadurch gekennzeichnet, dass** die Bragg-Gitter (5) entlang wenigstens eines Lichtwellenleiters (7) untereinander verschiedene Gitterperioden aufweisen und mittels einer Lichtquelle (22) spektral breitbandiges Licht in diesen Lichtwellenleiter (7) einstrahlbar ist, oder dass die Bragg-Gitter (5) entlang wenigstens eines Lichtwellenleiters (7) gleiche Gitterperioden aufweisen, mittels einer Lichtquelle (22) gepulstes, monochromatisches Licht in diesen Lichtwellenleiter (7) einstrahlbar ist und mittels einer Signalverarbeitungsvorrichtung (23) eine Laufzeit des rückgestreuten Lichts erfassbar und auswertbar ist.

10. Vorrichtung (1) nach einem der vorhergehenden Ansprüche, **dadurch gekennzeichnet, dass** der zumindest eine Lichtwellenleiter (7) und die Heizeinrichtung (10) in oder an einem steifen Trägerkörper (8) angeordnet sind, dessen Form den Verlauf des Lichtwellenleiters (7) in dem Abgaskanal (2) festlegt.

11. Vorrichtung (1) nach Anspruch 10,
**dadurch gekennzeichnet, dass** der Lichtwellenleiter (7) austauschbar in einem Hohlraum (9) des Trägerkörpers (8) angeordnet und durch den Trägerkörper (8) vor unmittelbarem Kontakt mit dem Abgas geschützt ist.

12. Vorrichtung (1) nach einem der Ansprüche 9 bis 11, **dadurch gekennzeichnet, dass** der Trägerkörper (8) zugleich die Heizeinrichtung (10) bildet.

13. Vorrichtung (1) nach einem der vorhergehenden Ansprüche, **gekennzeichnet durch** einen Sensor (30) zur Bestimmung einer Konzentration eines Schadstoffes in dem Abgas.

14. Verfahren zur Bestimmung eines Abgasvolumens einer stationären oder mobilen Einrichtung, insbesondere eines Schiffes, mit einer Vorrichtung (1) nach einem der vorhergehenden Ansprüche, wobei die Bragg-Gitter (5) auf eine Temperatur oberhalb der Abgastemperatur aufgeheizt werden und dabei eine von der Heizeinrichtung (10) abzugebende Wärmeleistung an die Abgastemperatur angepasst wird, oder die Bragg-Gitter (5) auf eine Temperatur unterhalb der Abgastemperatur abkühlt werden, und wobei Licht in die Lichtwellenleiterstruktur (6) eingekoppelt wird, aus von den darin angeordneten Bragg-Gittern (5) entgegen seiner ursprünglichen Ausbreitungsrichtung zurückgestreutem Licht eine Strömungsgeschwindigkeit des Abgases entlang des Verlaufes der Lichtwellenleiterstruktur (6) bestimmt und daraus das durch den Abgaskanal (2) strömende Abgasvolumen abgeleitet wird.

15. Verwendung der Vorrichtung (1) bzw. des Verfahrens nach einem der vorhergehenden Ansprüche zur Abgasemissionsmessung von stationären und mobilen Einrichtungen, insbesondere von Schiffen, wobei anhand eines ermittelten Abgasvolumens und zumindest eines Messwerts für eine Konzentration eines Schadstoffes in dem Abgas eine Schadstoffemission der Einrichtung bestimmt wird.

## Claims

1. System for determining exhaust gas volume for a stationary or mobile device, especially a boat, comprising
- a number of Bragg gratings (5) arranged distributed at prespecified positions transverse to the direction of flow (4) of an exhaust gas in an exhaust gas duct (2) of the device,
- an optical waveguide structure (6), in which the Bragg gratings (5) are embodied, with the optical waveguide structure (6) consisting of at least one optical waveguide (7),
- at least one light source (22) for beaming light into the optical waveguide structure (6) and
- at least one signal processing device (23), which establishes a speed of flow of the exhaust gas along the course of the optical waveguide structure (6) from light scattered back from Bragg gratings (5) in the optical waveguide structure (6) opposite to its original direction of propagation,
**characterised by**
- a heating device (10) arranged adjacent to the Bragg gratings (5), through which the Bragg gratings (5) can be heated to a temperature above the exhaust gas temperature of the exhaust gas, wherein a heat power to be output by the heating device (10) is able to be adapted to the exhaust gas temperature, or a cooling device arranged adjacent to the Bragg gratings (5) by which the Bragg gratings (5) can be cooled to a temperature below the exhaust gas temperature, and **characterised in that**
- the signal processing device (23) derives a flowing exhaust gas volume from the flow speed of the exhaust gas determined along the course of the optical waveguide structure (6).

2. System (1) according to claim 1,
**characterised in that** the optical waveguide structure (6) has optical waveguide sections (7a) crossing each other.

3. System (1) according to claim 2,
**characterised in that** an optical waveguide network (17) is embodied by the optical waveguide sections (7a) crossing one another.

4. System (1) according to claim 3,
**characterised in that** the optical waveguide network (17) is embodied by a single optical waveguide (7).

5. System (1) according to claim 1,
**characterised in that** the optical waveguide structure (6) has an optical waveguide (7) running in a spiral shape in which the Bragg gratings (5) are arranged one behind the other.

6. System (1) according to one of the preceding claims, **characterised in that** the heat power of the heating device (10), starting from an initial value, is able to be automatically increased step-by-step until the signal processing device (23) identifies unique temperature differences along at least one optical waveguide (7), or that the cooling device comprises at least one pipe (8) in which at least one optical waveguide (7) is arranged and around which a coolant is able to flow.

7. System (1) according to one of the preceding claims, **characterised in that** the heating device (10) or cooling device is arranged along the at least one optical waveguide (7) of the optical waveguide structure (17) and adjacent to said waveguide.

8. Method (1) according to claim 7,
**characterised in that** a predeterminable level of heating or cooling power per unit length of the optical waveguide (7) is able to the output by the heating device (10) or cooling device.

9. System (1) according to one of the preceding claims, **characterised in that** the Bragg gratings (5) have different grating periods along at least one optical waveguide (7) and a broad spectrum of light is able to be beamed into these optical waveguides (7) via a light source (22), or that the Bragg gratings (5) have the same grating periods along at least one optical waveguide (7), pulsed, monochromatic light is able to be beamed into these optical waveguides (7) by means of a light source (22) and a delay time of the backscattered light is able to be detected and evaluated by means of a signal processing device (23).

10. System (1) according to one of the preceding claims, **characterised in that** the at least one optical waveguide (7) and the heating device (10) are arranged in or on a rigid support element (8), the form of which defines the course of the optical waveguide (7) in the exhaust gas duct (2).

11. System (1) according to claim 10,
**characterised in that** the optical waveguide (7) is arranged in a replaceable fashion in a cavity (9) of the support element (8) and is protected from direct contact with the exhaust gas by means of the support element (8).

12. System (1) according to one of claims 9 to 11, **characterised in that** the carrier element (8) simultaneously forms the heating device (10).

13. System (1) according to one of the preceding claims, **characterised by** a sensor (30) for determining a concentration of a pollutant in the exhaust gas.

14. Method for determining a volume of exhaust gas of a stationary or mobile device, especially a boat, with a system (1) according to one of the preceding claims, wherein the Bragg gratings (5) are heated up to a temperature above the exhaust gas temperature and during this process a heat power to be emitted by the heating device (10) is adapted to the exhaust gas temperature, or the Bragg gratings (5) are cooled down to a temperature below the exhaust gas temperature, and wherein light is coupled into the optical waveguide structure (6), a flow speed of the exhaust gas along the course of the optical waveguide structure (6) is established by light scattered back from the Bragg gratings (5) disposed therein against its original direction of propagation and the volume of exhaust gas flowing through the exhaust gas duct (2) is derived therefrom.

15. A use of the system (1) or of the method according to one of the preceding claims for measuring exhaust gas emissions from stationary and mobile devices, especially from boats, wherein a pollutant emission of the device is established on the basis of an exhaust gas volume determined and at least one measured value for a concentration of a pollutant in the exhaust gas.

## Revendications

1. Dispositif de détermination du volume de gaz d'échappement pour une installation fixe ou mobile, notamment pour un bateau, comprenant
- plusieurs réseaux ( 5 ) de Bragg disposés d'une manière répartie en des positions déterminées à l'avance transversalement à la direction ( 4 ) du courant d'un gaz d'échappement dans un canal ( 2 ) pour du gaz d'échappement de l'installation,
- une structure ( 6 ) à fibre optique, dans laquelle les réseaux ( 5 ) de Bragg sont constitués, la structure ( 6 ) à fibre optique consistant en au moins une fibre ( 7 ) optique,
- au moins une source ( 22 ) lumineuse pour injecter de la lumière dans la structure à fibre optique et
- au moins un dispositif ( 23 ) de traitement du signal, qui détermine, à partir de la lumière rediffusée dans le sens contraire à son sens de propagation d'origine par des réseaux ( 5 ) de Bragg dans la structure ( 6 ) à fibre optique, une vitesse du courant du gaz d'échappement le long du tracé de la structure ( 6 ) à fibre optique,
**caractérisé par**
- un dispositif ( 10 ) de chauffage, qui est disposé au voisinage des réseaux ( 5 ) de Bragg et par lequel les réseaux ( 5 ) de Bragg peuvent être portés à une température au-dessus d'une température du gaz d'échappement, une puissance calorifique à céder par le dispositif ( 10 ) de chauffage étant adaptée à la température du gaz d'échappement, ou un dispositif de refroidissement, qui est disposé au voisinage des réseaux ( 5 ) de Bragg et par lequel les réseaux ( 5 ) de Bragg peuvent être refroidis à une température inférieure à la température du gaz d'échappement,
et **caractérisé en ce que**
- le dispositif ( 23 ) de traitement du signal déduit, de la vitesse du courant du gaz d'échappement déterminée le long de l'étendue de la structure ( 6 ) à fibre optique, un volume du gaz d'échappement en écoulement.

2. Dispositif ( 1 ) suivant la revendication 1,
**caractérisé en ce que** la structure ( 6 ) à fibre optique a des tronçons ( 7a ) de fibre optique qui se croisent.

3. Dispositif ( 1 ) suivant la revendication 2,
**caractérisé en ce qu'**un réseau ( 17 ) de fibre optique est formé par les tronçons ( 7a ) de fibre optique qui se croisent.

4. Dispositif ( 1 ) suivant la revendication 3,
**caractérisé en ce que** le réseau ( 17 ) de fibre optique est constitué d'une fibre ( 7 ) optique unique.

5. Dispositif ( 1 ) suivant la revendication 1,
**caractérisé en ce que** la structure ( 6 ) à fibre optique a une fibre ( 7 ) optique qui s'étend en spirale et dans laquelle les réseaux ( 5 ) de Bragg sont disposés les uns derrières les autres.

6. Dispositif ( 1 ) suivant l'une des revendications précédentes, **caractérisé en ce que** la puissance calorifique du dispositif ( 10 ) de chauffage peut, à partir d'une valeur de départ, être augmentée pas-à-pas automatiquement jusqu'à ce que le dispositif ( 23 ) de traitement du signal constate des différences de température nettes le long d'au moins une fibre ( 7 ) optique ou **en ce que** le dispositif de refroidissement comprend au moins un tube ( 8 ), dans lequel est disposée au moins une fibre ( 7 ) optique et devant lequel peut passer au moins un fluide frigorigène.

7. Dispositif ( 1 ) suivant l'une des revendications précédentes, **caractérisé en ce que** le dispositif ( 10 ) de chauffage ou le dispositif de refroidissement est disposé le long de la au moins une fibre ( 7 ) optique de la structure ( 17 ) à fibre optique et au voisinage de cette fibre.

8. Dispositif ( 1 ) suivant la revendication 7,
**caractérisé en ce qu'**une puissance calorifique ou frigorifique, pouvant être déterminée à l'avance, par unité de longueur de la fibre ( 7 ) optique peut être cédée par le dispositif ( 10 ) de chauffage ou par le dispositif de refroidissement.

9. Dispositif ( 1 ) suivant l'une des revendications précédentes, **caractérisé en ce que** les réseaux ( 5 ) de Bragg ont des périodes de réseau différentes entre elles le long d'au moins une fibre ( 7 ) optique et de la lumière à large bande du point de vue du spectre peut être injectée dans cette fibre ( 7 ) optique au moyen d'une source ( 22 ) lumineuse ou **en ce que** les réseaux ( 5 ) de Bragg ont de mêmes périodes de réseau le long d'au moins une fibre ( 7 ) optique, de la lumière monochromatique pulsée pouvant être injectée dans cette fibre ( 7 ) optique au moyen d'une source ( 22 ) lumineuse et une durée de parcours de la lumière rediffusée pouvant être détectée et exploitée au moyen d'un dispositif ( 23 ) de traitement du signal.

10. Dispositif ( 1 ) suivant l'une des revendications précédentes, **caractérisé en ce que** la au moins une fibre ( 7 ) optique et le dispositif ( 10 ) de chauffage sont disposés dans un corps ( 8 ) rigide formant support ou sur celui-ci, corps dont la forme fixe l'étendue de la fibre ( 7 ) optique dans le canal ( 2 ) pour du gaz d'échappement.

11. Dispositif ( 1 ) suivant la revendication 10,
**caractérisé en ce que** la fibre ( 7 ) optique est disposée avec possibilité d'être remplacée dans une cavité ( 9 ) du corps ( 8 ) formant support et est protégée par le corps ( 8 ) formant support d'un contact direct avec le gaz d'échappement.

12. Dispositif ( 1 ) suivant l'une des revendications 9 à 11, **caractérisé en ce que** le corps ( 8 ) formant support forme en même temps le dispositif ( 10 ) de chauffage.

13. Dispositif ( 1 ) suivant l'une des revendications précédentes, **caractérisé par** un capteur ( 30 ) de détermination d'une concentration d'une substance polluante dans le gaz d'échappement.

14. Procédé de détermination d'un volume de gaz d'échappement d'une installation fixe ou mobile, notamment d'un bateau, comprenant un dispositif ( 1 ) suivant l'une des revendications précédentes, dans lequel on porte les réseaux ( 5 ) de Bragg à une température supérieure à la température du gaz d'échappement et on adapte une puissance calorifique à céder par le dispositif ( 10 ) de chauffage à la température du gaz d'échappement, ou l'on refroidit les réseaux ( 5 ) de Bragg à une température inférieure à la température du gaz d'échappement, et dans lequel on injecte de la lumière dans la structure ( 6 ) à fibre optique, on détermine, à partir de la lumière rediffusée dans le sens contraire à son sens de propagation d'origine par les réseaux ( 5 ) de Bragg qui y sont disposés, une vitesse du courant du gaz d'échappement le long de l'étendue de la structure ( 6 ) à fibre optique et on en déduit le volume du gaz d'échappement s'écoulant dans le canal ( 2 ) pour le gaz d'échappement.

15. Utilisation du dispositif ( 1 ) ou du procédé suivant l'une des revendications précédentes pour la mesure d'émission de gaz d'échappement par des installations fixes et mobiles, notamment par des bateaux, dans laquelle, au moyen d'un volume du gaz d'échappement qui a été déterminé et d'au moins une valeur de mesure d'une concentration d'une substance polluante dans le gaz d'échappement, on détermine une émission de substance polluante de l'installation.
